(19) Europäisches Patentamt
European Patent Office
Office européen des brevets

(11) EP 0 398 636 B1

(12) EUROPEAN PATENT SPECIFICATION

(45) Date of publication and mention
of the grant of the patent:
**18.09.1996 Bulletin 1996/38**

(51) Int. Cl.$^6$: **B01J 20/12**

(21) Application number: **90305208.2**

(22) Date of filing: **15.05.1990**

(54) **A process for making acid activated bleaching earth**

Verfahren zur Herstellung einer säureaktivierten Bleicherde

Procédé pour obtenir une terre décolorante activée par l'acide

(84) Designated Contracting States:
**AT BE CH DE DK ES FR GB GR IT LI LU NL SE**

(30) Priority: **16.05.1989 US 352578**
**16.05.1989 US 352790**

(43) Date of publication of application:
**22.11.1990 Bulletin 1990/47**

(73) Proprietor: **ENGELHARD CORPORATION**
**Iselin, New Jersey 08830-0770 (US)**

(72) Inventors:
• **Taylor, Dennis R.**
**Houston, Texas 77014 (US)**
• **Ungermann, Charles B.**
**Livermore, California 94550 (US)**

(74) Representative: **Geering, Keith Edwin et al**
**REDDIE & GROSE**
**16 Theobalds Road**
**London WC1X 8PL (GB)**

(56) References cited:
**US-A- 1 492 184**   **US-A- 1 752 721**
**US-A- 1 781 265**   **US-A- 1 946 124**
**US-A- 2 477 386**

**Description**

The invention relates to a process for making acid-activated bleaching earth from certain naturally occurring clays and to novel acid-activated bleaching earth products obtained thereby.

Acid-activated clays of high activity are used to adsorb colored pigments (carotenoids, chlorophyll) and colorless pigments (phospholipids) from edible and inedible oils. This process is called "bleaching" and serves both cosmetic and chemical purposes. Thus, bleaching reduces color, whereby very clear, almost water white oils are produced that meet with consumer expectations. Bleaching also stabilizes the oil by removing colored and colorless pigments which tend to "destabilize" the oil, resulting in oils that rancidify more easily if they are not removed. The current and expected long term trend favors the use of highest possible bleaching efficiency clays with this process because: i) the smaller amounts of the high activity clays needed to produce desired refined oil properties mean that lower inventories can be maintained by the oil refiner; ii) refined oil losses depend somewhat on the amount of clay used because less high activity clay needs to be used and therefore oil losses are lower; and iii) less spent clay is produced when using high activity clay, and hence land-fill disposal costs are lower.

US-A-1 492 184 (published 1924) proposes treating clays "in a broad sense" including "those substances known as montmorillonite, bauxite, willonite, pyrophyllite, kaolinite, fullers earth, diatomaceous earths and kindred substances" with up to 10% of their weight of sulphuric or hydrochlic acid to improve the clays "for the decolorization, neutralizing and treatment of petroleum oils, vegetable and animal oils, waxes, sugars or other substances"; however, no practical demonstration of treating any particular clay is given.

The conventional process for producing acid-activated bleaching clays utilizes calcium bentonite clays and requires relatively high acid dosages to achieve maximum bleaching efficiencies. The calcium bentonites used in the process are hydrated sodium calcium aluminosilicates which typically are mildly basic. The manufacture of highest quality commercial bleaching earths typically requires 70-90 grams of 96% $H_2SO_4$/100 grams of dry clay - 67.2 to 87.4% acid dosage where

$$\%\text{Acid Dosage} = \frac{\text{wt. of pure acid} \times 100}{\text{wt. of clay (volatile free basis)}}$$

Extensive leaching of the clay structure in the form of solubilized salts takes place and these are removed in the process. Because of these high acid dosages, and the extensive leaching that takes place during the leaching process, the yield of bleaching clay is low (typically in the range of 75-85 wt%). The acidic salts formed during activation and residual acid must be washed off and separated by filtration from the product clay. If high levels of unused acid and acidic salts (iron and aluminum sulfates) are left in the clay, the quality of the bleached oil is impaired. High residual acid levels generate undesirable free fatty acids from the fatty acid triglycerides in the oil. Finally, the leachate (acidic salts and residual acid) is a waste stream that contains materials harmful to aquatic life and therefore must be neutralized or otherwise disposed of in an environmentally acceptable manner. This constitutes an additional expense of producing bleaching clays from pure calcium bentonites.

Clay sources used in the past to provide acid-activated bleaching clay of high activities have been primarily restricted to calcium bentonites, i.e., clays in which the principal exchangeable cation is a calcium ion, and these are sometimes also referred to as sub-bentonites.

Another type of naturally-occurring clay simply requires heat to impart bleaching activity. These are the clays rich in the minerals attapulgite or sepiolite, now frequently classified as palygorskite clays. Mineralogically, the palygorskite clays are readily distinguishable from the bentonites (smectites or montmorillonites) and rarely are palygorskites and bentonites used interchangeably.

It has been the general belief that palygorskite clays do not respond to the conventional acid-activation treatment. The same is true of certain bentonites, namely sodium (swelling) bentonites, such as Wyoming bentonites.

The following publications pertain to the art of preparing bleaching earths from naturally-occurring clays:

A.D. Rich, "Bleaching Clay", Industrial Rocks & Minerals, 3rd. Ed., AIME, NY pp 92-101 (1960).
R. Fahn, "Bleaching Earths-Preparation, Properties, Practical Applications", Chapter 1 Internal Symposium, Brussels, April 28-29 (1976).
L.L. Richardson, "Use of Bleaching Clays in Processing Edible Oils", JAOCS, 55, 777 (1978).
G.M. Clarke, "Special Clays", Ind. Minerals, Sept., 25 (1985).
D.R. Taylor, D.B. Jenkins, "Acid-Activated Clays", Soc Mining Eng Of AIME, Transactions, 282 1901 (1988).
R.L. Grim, "Applied Clay Mineralogy", pp 320-326, (1962). A.C.D. Newman, "Chemistry of Clays and Clay Minerals," pp 107-114, (1987).

The following patents relate to the production of acid-activated bleaching earths:

U.S. Pat. 1,397,113 (1921);

U.S. Pat. 1,579,326 (1924);

U.S. Pat. 1,642,871 (1927);
U.S. Pat. 2,470,872 (1949);
U.S. Pat. 2,472,489 (1949);
U.S. Pat. 2,484,828 (1949);
U.S. Pat. 2,553,239 (1946);
U.S. Pat. 2,563,977 (1949);
U.S. Pat. 2,574,895 (1951);
U.S. Pat. 2,671,058 (1952);
U.S. Pat. 2,872,419 (1959);
U.S. Pat. 2,892,800 (1959);
U.S. Pat. 2,981,697 (1961);
U.S. Pat. 3,617,215 (1971);
EP-A- 0,276,954 (1988).

Generally, in the patents listed above, calcium bentonites are the source clays and high acid dosages, typically above 40-50 gms of 96% $H_2SO_4$/100 gms of dry clay, are required for maximum improvement in bleaching efficiency. The acid treated clay is invariably washed to remove soluble salts and entrained acid - see for example U.S. 1,397,113 and 1,642,871 and the recently published EP-A-0,276,954.

It is known to add citric acid to oils that are bleached with mixed attapulgite/calcium bentonite bleaching earths in order to enhance chlorophyll adsorption. Citric acid is not used to activate the clay.

U.S. 3,029,783 (Sawyer, et al), directed to an improved animal litter composition, describes an acid treatment, preferably using an attapulgite clay, which employs relatively low acid dosages without washing. The processing requires calcination at 371-538°C (700-1,000°F) prior to the acid treatment and calcination at 399-593°C (750-1,100°F)after acid treatment. The patent is not directed to the manufacture of a bleaching earth and we have found that the procedure does not lead to the preparation of a high efficiency bleaching earth.

Surprisingly, it has been found that mildly acidic uncalcined naturally-occurring mixtures of palygorskite clay and calcium bentonite clay (hereinafter "high susceptibility source clay" or "HSSC")require significantly lower acid dosages (e.g., 5-10 grams of 96% $H_2SO_4$/100 grams HSSC clay) to achieve their maximum bleaching levels. Because so little acid needs to be used with these naturally-occurring clay mixtures, residual acid levels left on these clays are quite low and subsequent washing, filtration steps or post-calcination steps are unnecessary. In fact, it has been found that the requisite acid can simply be sprayed on dry powdered clay, or a clay-acid slurry can be mixed and then spray dried, to produce a high activity bleaching clay.

Palygorskite clays include attapulgite clays also known as Attapulgus clay, or Georgia-Florida fuller's earth. These clays are usually composed principally of the mineral attapulgite, a crystalline hydrated magnesium aluminum silicate, but may also contain significant amounts of other minerals such as bentonite (montmorillonite), calcium carbonate, quartz and feldspar, and in some cases sepiolite.

The HSSC clays used in this invention contain at least 10% and up to 90%, most preferably from 20% to 60%, by weight of attapulgite; they suitably have pore volumes of 0.15 to 0.5 cc/g, preferably above 0.2 cc/g. The clays used are limited to those low in their content of carbonate minerals - e.g. naturally-occurring mixtures of sepiolite and bentonite clays must be low in content of carbonates to be used in the invention; this excludes most commercial deposits of primary and sedimentary sources of palygorskite clay which are usually associated with limestone.

The results of our experiments showed that very low acid dosages (1-10%, preferably 3-5 wt%) will work with naturally occurring HSSC attapulgite/bentonite mixtures; we believe these particular clays have features uniquely favorable for low acid dosage activations. Much higher acid dosages (i.e. 70-90 wt%) are required to achieve maximum adsorptive capacities for bentonite clays.

In the accompanying drawings:

Figure 1 illustrates the conventional process for producing bleaching clay from conventional calcium bentonite source clays ;

Figure 2 outlines the steps of a spray coating process of the invention;

Figure 3 illustrates a spray drier process of the invention

Figure 4 illustrates another embodiment of the invention; and

Figures 5 and 6 are graphs showing the effect of increasing acid (sulfuric) dosage on the chemical composition of HSSC clay -Figure 5 shows the change in $SiO_2$ and $Al_2O_3$ and Figure 6 the change in iron, calcium, magnesium and phosphorus of the same HSSC clay.

The HSSC clays used in this invention possess a slurry pH less than 7 and are naturally occurring attapulgite/bentonite mixtures which contain 10-90% attapulgite, generally from 20% to 60% attapulgite and which have pore volumes greater than 0.15 or 0.20 cc/g. The especially preferred ranges are from 37-78% attapulgite, pH 5.4-6.5, and pore volume 0.25-0.35 cc/g.

The HSSC clays used usually contain no more than 5 wt.%, preferably below 1 wt.%, $CO_2$ on a moisture free basis.

Mixed attapulgite/bentonite clays possessing the desired properties for use in this invention are found in sedimentary beds located in the state of Georgia near the town of Ochlocknee, in Thomas County. According to Grim (Clay Mineralogy, 2nd Ed., McGraw-Hill Book Co., New York), such clay deposits are often formed when detrital materials are laid down and transformed in magnesium rich lacustrine environments. At any rate, clays of the desired type obtained from the Ochlocknee area have properties as shown in Table A.

TABLE A

| Physiochemical Properties of High Susceptibility Attapulgite/Bentonite Source Clay (Typical): | | | | |
|---|---|---|---|---|
| Chemical Analysis (Wt%, Vf basis) | | | Physical Analysis | |
| $SiO_2$ | 71 - 75% | CaO | 0.70 -2.3% | pH (10% slurry) | 5.0 - 5.8 |
| $Al_2O_3$ | 11 - 16% | $Na_2O$ | 0.20 -0.40% | Surface area ($m^2$/gm) | 100 - 150 |
| $Fe_2O_3$ | 3.8 - 6.7% | $K_2O$ | 1.1 - 1.5% | Pore Volume (cc/gm) | 0.20 - 0.31 |
| MgO | 2.8 - 5.8% | $P_2O_5$ | 0.30 -1.2% | | |

The invention is not limited, however, to the use of such clay.

In defining clays the terms "volatile matter" (V.M.) and "Loss on Ignition" (L.O.I.) must frequently be used. Volatile material is classified according to three levels of thermal treatment: loosely-held water of hydration known as free-moisture (F.M.) is measured by heating to constant weight at 104.5°C (220°F); structural water held chemically in the molecular structure of the clay is measured by heating from 104.5°C (220°F) to constant weight at 649°C (1200°F); other volatile matter such as inorganic carbonates, principally calcium carbonate, release $CO_2$ at 982°C (1800°F).

Various methods related to water content or thermal treatment may be used to express percentages of components in the clay. Moisture-free or dry weight is clay weight after heating to constant weight at 104.5°C (220°F). Volatile-free weight is the weight of the clay after heating to constant weight at 649°C (1200°F). Loss-on-ignition (L.O.I) Weight is determined by heating to constant weight at 982°C (1800°F). Also, volatiles content may be expressed on an as received basis.

The difference between loss on ignition weight and volatile-free weight is a fairly accurate representation of carbonate content, since carbonates generally account for virtually all of the non-aqueous volatile matter in the clay. An alternative method for measuring the carbonate content (as % $CO_2$) is to finely pulverize the clay and heat in the presence of a strong mineral acid such as hydrochloric acid to release carbon dioxide. The gas can then be collected and its volume measured, from which the weight percent of $CO_2$ can be calculated. The former method was employed to determine the carbonate content of clays used in the Examples described hereinafter.

XRD Method of Determining Attapulgite Content

X-ray diffraction is used to determine the attapulgite content of the clays described herein.

To do this, a comparison is made between the peak areas of the 110 peak of attapulgite and the 001 peak of the montmorillonite in the region 3° - 20° 2Θ when XRD machine conditions are as follows: beam slit - .2°
Cu K-$\alpha$/Ni filter
rate - 1/2°/min.
time constant - 1 sec.
baseline - .15V
beam current - 31 mA
chart speed - 1 cm/min.
window - 1V
voltage - 40KV
range - 1K or 10K CPS

In order to calibrate the intensity of these two peaks, a series of mixtures of pure crude attapulgite (Emcor® 66 low-carbonate attapulgite clay supplied by Engelhard Corporation) and pure crude bentonite (Filtrol Gr 2) were prepared by mixing known quantities of the finely ground powders [100%-75μm (-325 mesh)] whose moisture contents were also known. With the weights and moisture contents of the clays used and the resultant XRD patterns for each of the mixtures, it is possible to calibrate the relative response of these two peaks to the x-ray beam. The assumption is made that the response of these peaks in a physical mixture is the same as it will be in the naturally occurring mixture of these two clays. Using this method, it was determined that the intensity correspondence between the 110 peak of attapulgite and the 001 peak of montmorillonite was 1:2.32.

X-ray patterns of suitable HSSC was found to be essentially the same as would be expected from X-ray patterns of mechanical mixtures of attapulgite and calcium bentonite, although a low intensity peak at $7.2 \times 10^{-8}$ cm. was observed from a HSSC that was not observed in X-ray patterns of either pure attapulgite or calcium bentonite or their mechanical mixtures.

Mineral acids (hydrochloric, phosphoric and sulfuric), a strong organic acid (formic) and a complexing acid (citric) have been utilized in practice of the invention. Sulfuric acid is preferred.

In one embodiment of the invention, 3-5% by weight of concentrated acid (based on the volatile free weight of HSSC clay being activated) is added to enough water and clay so that the volatile free solids content of the resultant clay/acid/water slurry is in the range 20-25 wt%; thereafter, the slurry can be heated for 1-5 hours with gentle stirring, filtered (washing is not necessary, but can be practiced), dried, and ground to yield a finished product suitable for use as described below.

Although higher acid dosages may be employed, no significant advantages are imparted by this effort, and since acid is a costly reagent, lower acid dosages are preferred. (See Table 1).

As can be seen from TABLE 1, treatment with acid tends to reduce CaO, MgO, and $P_2O_5$ content at all dosage levels (accompanied by an apparent increase in $SiO_2$ content). Only at the higher acid dosages is $Al_2O_3$ significantly removed from the clay. This suggests that exchange of $Ca^{++}$ and $Mg^{++}$ for protons is the primary role of the acid at lower dosages, but that actual leaching of the clay structure (i.e. - removal of structural ions) does begin to occur at the higher acid dosages.

In general, the process of the invention comprises selecting on acidic naturally-occurring HSSC mixture of bentonite/palygorskite clays, crushing, preferably subjecting the clay to a preliminary drying step (typically to 15 to 30 wt% VM), grinding the dry clay, mixing the clay with dilute acid, drying and thereafter pulverizing unless the acid treated clay is already in desired particulate form. Preliminary drying is carried out under conditions such as to suit the clay for the grinding method e.g. heating at 93-149°C (200-300°F) to reduce 15 to 25 wt% VM. Optionally, the source clay is extruded before drying and grinding. In some instances, grinding can take place before drying.

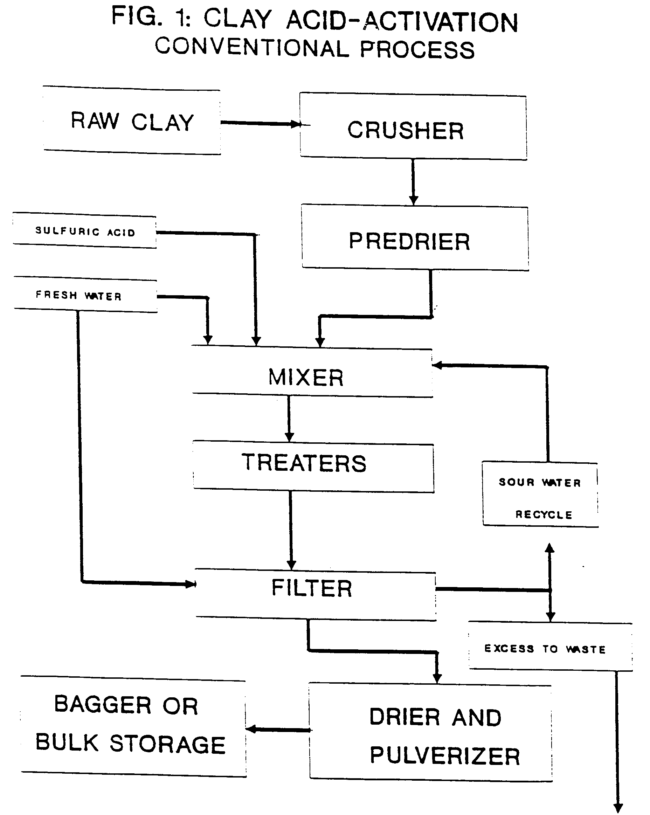

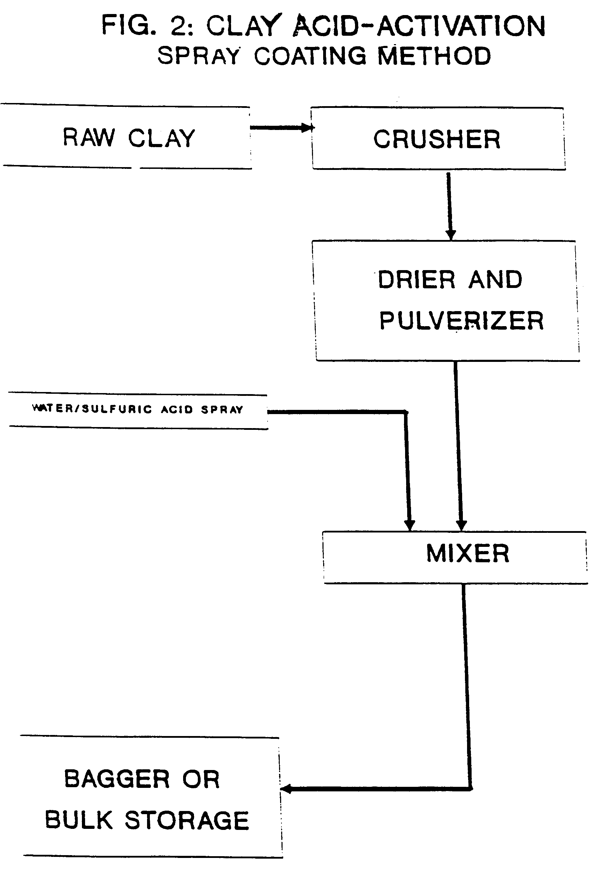

Reference to Figures 1-4 serves to illustrate advantages and essential differences between the processes made possible by the use of high susceptibility source clays in accordance with this invention (Figures 2-4) and conventional calcium bentonite source clays (Figure 1).

As shown in Figure 1, conventional processing entails crushing, predrying (necessary so the clay particles will break apart or "slake" properly when added to water to give a uniform, colloidal dispersion suitable for activation), a mixing step (where clay, acid and water are combined), a treater or "leach" step (where the clay/acid/water slurry is heated to near boiling with gentle agitation for about 5 to 5½ hours), and a washing/filtration step (where entrained unused acid and acidic salts are extracted from the filter cake). Some of the liquid waste stream from this step can be recycled back to the mixer, but the greater majority must be disposed of by other means. Since aluminum containing salts formed from the reaction between the acid and bentonite clay during the leaching process are highly toxic to aquatic life, the waste stream from this process cannot be discharged to surface waters or to the subsurface water table. In some cases, an expensive deep well injection facility must be maintained to dispose of these wastes, and in other cases, the acidic wastes are precipitated with lime or caustic, and the neutral solids produced are placed in land-fill. In any case, some method of waste disposal is required for an environmentally sound operation. The extracted filter cake from this operation is then dried, ground, and bagged or placed in bulk storage.

In contrast to the process just described, processes of the invention utilizing high susceptibility clays are simpler, more economical and do not generate waste products which are difficult to dispose of and add to production costs.

Figure 2 outlines steps of a spray coating process for producing acid-activated bleaching clay from high susceptibility clays. In accordance with one embodiment of the invention, the coarse feed from the crusher (nominal 0.65 cm (1/4")diameter particles) is fed directly to a drying and grinding operation where it is dried to a level somewhat dryer than desired for the finished product, and ground to the desired average particle size. Typically, the production has 10-15 wt% VM and 80-85 wt% is finer than 75µm (200 mesh).

An acid/water mixture is then sprayed directly onto the dried and ground powder using such proportions of acid and water that optimized bleaching performance of the finished product is attained. Preferably, the acid/water spray is added directly to the powder while it is still warm and before it takes up moisture from the surrounding atmosphere. Intimate mixing of the raw clay powder and the acid/water spray can be achieved by any number of methods, including, for example, spraying the acid/water into the clay as it is mixed in a glass-lined Pfaudler mixing vessel, by spraying acid solution into the tumbled clay powder in a rotating rotary pan spray-coating machine, by spraying onto the clay as it travels along a moving belt conveying system, or by spraying onto the clay as it is moved by a screw conveyor. The dried, ground powder, now impregnated with the acid/water mixture, is bagged or placed in bulk storage as finished product.

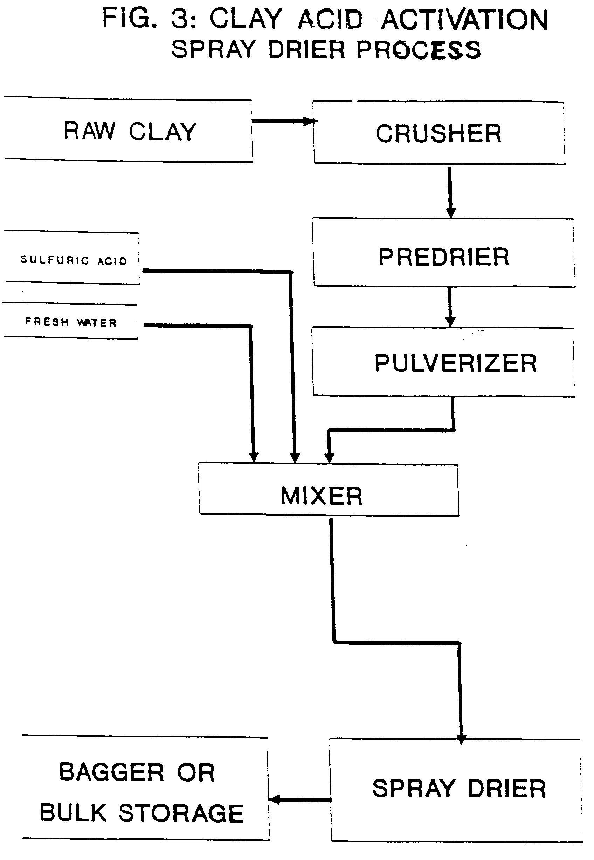

Figure 3 outlines steps of a spray drying process to produce acid-activated bleaching clay from high susceptibility clays. In this case, raw clay is crushed then dried, typically to 20-30 wt.% VM at 93-149°C (200-300°F) and pulverized to finely ground powder [e.g. 99%-75µm(-200 mesh)] suitable for spray drying using either high pressure nozzles or a spinning disk as commonly used in such apparatus. The finely ground clay is mixed with sufficient water and requisite sulfuric acid to form a slurry which can be spray dried. The high susceptibility source clay used in this process will be activated instantaneously during the spray drying operation; therefore, heating of the slurry before the spraying operation need not be practiced although such heating will not be deleterious to the final product. The spraying conditions are set to produce spray-dried particles whose average diameter falls in the range 15-30 microns. These particles of acid-activated high susceptibility source clay can be bagged or placed in bulk storage as finished product.

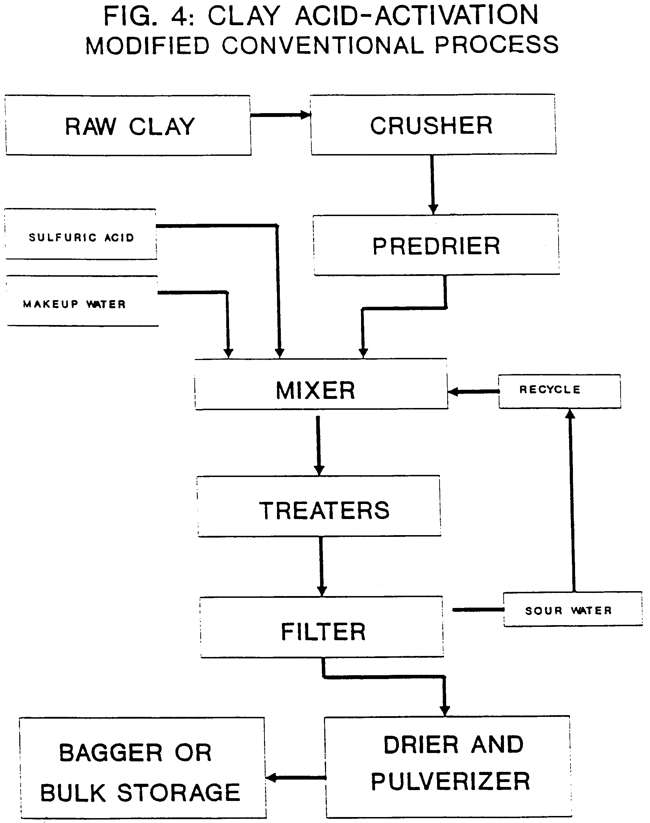

Figure 4 outlines steps of a modified conventional process to produce acid-activated bleaching clay from high susceptibility clays. This process uses the same equipment and process train as that previously described for a conventional acid-activation process (Figure 1), but with the following essential differences: i) much lower acid dosages are employed (i.e., 3-10 grams of 96% $H_2SO_4$/100 grams of dry clay); ii) shorter reaction times can be employed (1-3 hours); iii) 100% of the "sour "water which is recovered from the filtration step can be recycled back to the mixing step where only enough additional water plus fresh mineral acid is added to achieve the desired levels of bleaching activity; and iv) since all of the sour water is recycled, there is no waste stream of acidic salts and unused acid requiring disposal.

When edible (and inedible) animal or vegetable oils are treated with bleaching clays, the objective is to reduce the levels of certain trace constituents (including carotenoids such as B-carotene, pheophytins and chlorophyll, and peroxides, among others). Color pigments, such as B-carotene (reddish-orange pigment) and chlorophyll (green pigment) must be removed if the oil is to be of suitably light color to meet with consumer acceptance; peroxides (highly reactive molecules) must be removed in order to obtain an oil exhibiting good photolytic and chemical stability (i.e., - one which will not rancidify easily). Additionally, it is desired that levels of free fatty acids produced when contacting vegetable oils with acid-activated bleaching clays should not be excessively high since they constitute a refining loss.

Those familiar with the art of bleaching are aware of these and other quality control tests to monitor oil quality during bleaching. Red and yellow color is commonly monitored using an automatic tintometer according to the procedures listed in the American Oil Chemists' Society Official and Tentative Methods (AOCS Official Method Cc 13b-45); chlorophyll (AOCS Official Method Cc 13d-44); peroxides (AOCS Official Method Cd 8-53; rev. Ja 8-87); and free fatty acids (AOCS Official Method Ca 51-40). In all cases, the lower the values obtained, the better the quality of the resultant oil. Typically, for instance, when bleaching a caustic refined soybean oil, refiners find that chlorophyll reduction is the most important quality parameter, and over time, it has been found that adequate bleaching has occurred if this constituent can be reduced to the 50-90 ppb range. When this level is obtained, other oil constituents are usually well below the levels of which they would cause problems with regard to achieving satisfactory finished oil quality.

The following Examples are presented in order to more fully explain and illustrate the invention. The Examples are not be construed as limiting the invention.

Example 1

Three different source clays (A - high purity attapulgite clay; B - high purity bentonite clay; C - HSSC attapulgite/bentonite clay mixture) were subjected to acid-activation with sulfuric acid at varying acid dosages for 5½ hours, and then washed, filtered, dried and ground to finished products.

Clay A contained 93 wt.% attapulgite, clay B 0 wt.% attapulgite, and clay C 72 wt.% attapulgite.

Following are chemical and physical properties of clays A, B and C along with a summary of activation conditions.

TABLE 1.

CHEMICAL/PHYSICAL PROPERTIES OF STUDY CLAYS

| ACID(1) DOSE | CHEMICAL ANALYSIS (WT%, Vf BASIS) | | | | | | | | | SURFACE AREA (m2/g) | PORE VOLUME (cc/g) | SLURRY pH |
|---|---|---|---|---|---|---|---|---|---|---|---|---|
| | SiO2 | Al2O3 | Fe2O3 | CaO | MgO | K2O | Na2O | TiO2 | P2O5 | | | |
| **CLAY A (2)** | | | | | | | | | | | | |
| 0 | 67.4 | 10.2 | 3.88 | 5.39 | 11.3 | 0.87 | 0.04 | 0.5 | – | 95 | 0.29 | 8.6 |
| 10 | 72.7 | 11.4 | 4.05 | 2.76 | 10.8 | 0.88 | 0.09 | 0.53 | – | 126 | 0.32 | 6.4 |
| 20 | 73.5 | 10.5 | 4.04 | 0.53 | 8.77 | 0.86 | 0.08 | 0.55 | – | | | 3.5 |
| 30 | 75.1 | 9.21 | 4.11 | 0.25 | 7.96 | 0.84 | 0.07 | 0.57 | – | 169 | 0.35 | 3.1 |
| 45 | 78.1 | 7.99 | 3.6 | 0.18 | 6.76 | 0.8 | 0.08 | 0.6 | – | | | 2.7 |
| 60 | 80.9 | 6.71 | 2.65 | 0.13 | 5.96 | 0.78 | 0.05 | 0.61 | – | 234 | 0.4 | 2.6 |
| 90 | 85.1 | 4.62 | 1.47 | 0.07 | 4.75 | 0.69 | 0.09 | 0.6 | – | 199 | 0.4 | 2.6 |
| **CLAY B (2)** | | | | | | | | | | | | |
| 0 | 65.6 | 18.9 | 5.61 | 4.07 | 3.59 | 0.83 | 0.05 | 0.89 | – | 59 | 0.09 | 8.6 |
| 10 | 68 | 19.6 | 5.5 | 1.83 | 3.1 | 0.76 | 0.05 | 0.93 | – | 83 | 0.12 | 3.5 |
| 35 | 72.7 | 16.8 | 5.01 | 1.39 | 2.46 | 0.77 | 0.09 | 0.99 | – | 252 | 0.25 | 2.9 |
| 50 | 76.2 | 14.1 | 4.43 | 1.15 | 2.01 | 0.81 | 0.15 | 0.99 | – | 286 | 0.36 | 3.4 |
| 60 | 77.8 | 12.6 | 3.95 | 1.63 | 1.74 | 0.81 | 0.2 | 0.96 | – | 297 | 0.43 | 3.8 |
| 95 | 84.6 | 8.1 | 2.66 | 0.98 | 7.92 | 0.87 | 0.32 | 0.72 | – | 237 | 0.5 | 2.9 |
| **CLAY C (2)** | | | | | | | | | | | | |
| 0 | 72.1 | 13.1 | 4.62 | 1.55 | 5.76 | 1.26 | 0.29 | 0.58 | 0.69 | 133 | 0.32 | 6.6 |
| 10 | 73.1 | 12.6 | 5.24 | 0.33 | 5.15 | 1.19 | 0.25 | 0.6 | 0.45 | 161 | 0.32 | 2.8 |
| 20 | 74.8 | 12.1 | 4.8 | 0.21 | 4.51 | 1.15 | 0.23 | 0.62 | 0.39 | | | 2.6 |
| 30 | 76.2 | 11.4 | 4.29 | 0.15 | 3.99 | 1.13 | 0.21 | 0.63 | 0.32 | 188 | 0.31 | 2.6 |
| 45 | 79.2 | 10.1 | 3.47 | 0.11 | 3.36 | 1.08 | 0.21 | 0.65 | 0.21 | | | 2.5 |
| 60 | 81.5 | 8.82 | 2.9 | 0.08 | 2.86 | 1.02 | 0.22 | 0.67 | 0.17 | 223 | 0.38 | 2.5 |
| 90 | 84.9 | 6.49 | 1.74 | 0.07 | 2.02 | 0.91 | 0.24 | 0.67 | 0.12 | 205 | 0.38 | 2.5 |

(1)   % Acid Dose = (wt of pure acid X 100)/(wt of dry clay).

(2)   Acid activation conditions:  conc. H2SO4; 25 wt% solids; 5.5 hrs; 99°C (210°F); then washed, filtered, dried and ground to finished products.

These materials were then used at constant dosage (0.5 wt% clay, as is, based on amount of oil) to treat a typical caustic refined soybean oil. The oil quality parameters previously discussed were then measured as a function of activating acid dosage and compared to those obtained when using two commercial bleaching clays, high activity Filtrol Gr 105, and very high activity Filtrol Gr 160.

TABLE 2 shows that all of the clay samples tested benefited from the acid-activation process. For example, compare the results obtained at 0% acid dosage (raw clay) versus those obtained at higher acid dosages. Nevertheless, the high purity attapulgite which contained 3% carbonate required at least 20% acid dosage to produce a product capable of achieving an oil quality where the most important quality parameter, chlorophyll, falls in the desired range (50 to 90 ppb). The high purity bentonite required even higher dosages (in the range 45-90%) to achieve comparable bleaching activity. In contrast, the high susceptibility source clay C achieved a chlorophyll bleaching efficiency in the desired range with as little as 10% acid dosage.

TABLE 2

| SOURCE CLAY | % ACID DOSE | LOVIBOND RED | CHLOROPHYLL (PPB) | PEROXIDE VALUE | %FFA (WT%) |
|---|---|---|---|---|---|
| EFFECT OF CLAY SOURCE ON RESPONSE TO ACID ACTIVATION AND ADSORPTION EFFICIENCY FOR TREATING OIL | | | | | |
| A | 0 | 10.2 | 303 | 8.2 | 0.035 |
| | 10 | 9.7 | 194 | 7.0 | 0.041 |
| | 20 | 2.5 | 43 | 2.6 | 0.038 |
| | 30 | 2.4 | 49 | 2.6 | 0.039 |
| | 45 | 2.6 | 64 | 2.7 | 0.045 |
| | 60 | 4.1 | 31 | 4.0 | 0.042 |
| | 90 | 8.2 | 134 | 6.6 | 0.042 |
| B | 0 | 13.9 | 660 | | |
| | 10 | 13.6 | 520 | | |
| | 20 | 13.4 | 381 | | |
| | 30 | 10.2 | 232 | | |
| | 45 | 8.0 | 85 | | |
| | 60 | 3.8 | 37 | | |
| | 90 | 2.6 | 15 | | |
| C | 0 | 3.5 | 160 | 4.2 | 0.039 |
| | 10 | 2.2 | 54 | 0.6 | 0.040 |
| | 20 | 2.1 | 52 | 0.5 | 0.051 |
| | 30 | 2.1 | 54 | 0.5 | 0.042 |
| | 45 | 2.2 | 62 | 0.5 | 0.040 |
| | 60 | 2.1 | 60 | 0.6 | 0.044 |
| | 90 | 2.2 | 74 | 1.3 | 0.043 |
| Gr 105 | - | 8.0 | 88 | 6.2 | 0.047 |
| Gr 160 | - | 3.8 | 34 | 3.4 | 0.049 |
| Starting Oil | - | 15.2 | 715 | 9.7 | 0.045 |

Example 2

A sample of high susceptibility source clay (C) was dried at 110°C to 10.5 wt.% LOD (loss on drying, 300°C/1 hour), ground [90% <75μm (<200 mesh)] and then spray-coated with dilute (10% - 25%) sulfuric acid solutions to yield samples which were subjected to acid dosages between 1-8 wt%. The spray-coating was accomplished by spraying a mist of the dilute sulfuric acid solution into a rotating vessel containing the dried, powdered samples of high susceptibility clay. After allowing the samples to equilibrate at room temperature for three days in closed containers, they were redried (at 110°C) to 10.5 wt% LOD and any agglomerates broken up so that the final sample was at least 90%-75μm (-200 mesh).

These samples were then evaluated as in Example 1 (i.e., - 0.5 wt% clay, as is, based on amount of oil).

TABLE 3

| EFFECT OF ACID DOSAGE ON BLEACHING ACTIVITY OF SPRAY-COATED HIGH SUSCEPTIBILITY SOURCE CLAY | | | | | |
|---|---|---|---|---|---|
| SOURCE CLAY | % ACID DOSE | LOVIBOND RED | CHLOROPHYLL (PPB) | PEROXIDE VALUE | %FFA (WT%) |
| C | 1 | 3.2 | 60 | 4.0 | 0.038 |
| | 3 | 2.7 | 53 | 1.9 | 0.037 |
| | 5 | 2.9 | 67 | 1.5 | 0.040 |
| | 8 | 4.3 | 86 | 3.3 | 0.040 |
| Gr 160 | - | 3.7 | 36 | 3.4 | 0.049 |
| Starting Oil | - | 15.2 | 710 | 9.2 | 0.039 |

As shown in TABLE 3, dosages as low as 1 wt% sulfuric acid were sufficient to produce good activity bleaching clays. In this case, all of the acid added to the clay remained associated with that sample, although conversion to calcium and magnesium salts via reaction with the high susceptibility clay is highly likely. At any rate, adsorptive activities of these materials as well as their tendency to generate free fatty acids were quite acceptable even through none of the samples received any subsequent washing (a salient feature of being able to use this process with high susceptibility source clays.) Using this procedure, optimum bleaching activities appeared to be realized when acid dosages were 3-5 wt%.

More specifically, data in TABLE 3 show better reduction of red color and peroxide value (in the oil) was obtained with the high susceptibility source clay when activated with 3-5 wt% sulfuric acid than was realized with premium quality Filtrol Gr 160 bleaching clay. Increased production of free fatty acids was nil with the spray-coated high susceptibility source clay, whereas increased production of free fatty acids was clearly evident with the commercial Filtrol Gr 160 bleaching clay. Although the spray-coated high susceptibility source clay was not as efficient as Gr 160 bleaching clay for removing green color (chlorophyll) on an equal weight basis, it would still be considered adequate, particularly in view of its other superior qualities.

Example 3

A sample of high susceptibility source clay (C) was sized to an average 6.5mm (¼")and dried to a moisture content of about 20 wt% (LOI @ 1,000°C). The clay sample was then slurried (24 wt% VF clay weight) with water/sulfuric acid at either 5% or 10% acid dosage for 3 h at 99°C (210°F). After the reaction period was over, the samples were filtered, and in some cases washed with additional volumes of water, and then dried and ground as previously described in Example 2.

Table 4 give the results of the activity testing (as described above) for these samples versus the degree of washing they received. One measure of the degree of washing was the residual acidity exhibited by these materials. Residual acidity was determined by boiling 5 grams (as is basis) of clay with 100 ml of distilled water or 3 minutes, filtering, adding 100 ml of hot distilled water to the filter cake just before it dried, and repeating one more time. The filtrate (plus one drop of phenolphthalein indicator solution) was then titrated with 0.0893 N KOH solution to the pink end point. The residual acidity is reported as mg of KOH/gram of clay (and can be obtained as a direct reading of the buret in milliliters when using 0.0893 N KOH solution). As can be seen from data in Table 4, washing, or the lack of washing (as measured by residual acidity) has no effect on the performance of the activated bleaching clay when prepared at 5% acid dosage level. At the 10% acid dosage level, the unwashed sample shows some loss of efficiency for removing chlorophyll, and a slight tendency to increase free fatty acids; however, the values obtained are well with the acceptable range. Also, even lower peroxide values were obtained with the materials prepared at the 10% dosage.

TABLE 4

| EFFECT OF WASHING (AS MEASURED BY RESIDUAL ACIDITY) ON BLEACHING ACTIVITY OF HIGH SUS-CEPTIBILITY SOURCE CLAY | | | | | |
|---|---|---|---|---|---|
| Residual Acidity[1] | Volume Wash Water[2] | Lovibond Red Value | Chlorophyll (ppb) | Peroxide Value | %FFA (wt%) |
| (5% acid dosage) | | | | | |
| 6.9 | None | 2.8 | 47 | 1.9 | 0.041 |
| 2.5 | 0.73 | 2.7 | 45 | 1.8 | 0.042 |
| 2.2 | 1.45 | 2.7 | 46 | 1.5 | 0.038 |
| 1.6 | 2.90 | 2.8 | 47 | 1.7 | 0.043 |
| (10% acid dosage) | | | | | |
| 14.6 | None | 3.0 | 61 | 0.9 | 0.046 |
| 4.1 | 1.45 | 2.8 | 48 | 0.6 | 0.041 |
| 3.0 | 2.90 | 3.8 | 48 | 0.7 | 0.042 |
| 2.2 | 5.80 | 2.9 | 48 | 0.9 | 0.041 |
| Gr 160 | - | 3.6 | 34 | 2.7 | 0.045 |
| Starting Oil | | 15.2 | 715 | 10.1 | 0.044 |

[1] mg KOH/gm clay.
[2] liters water/60 gram clay.

## EXAMPLE 4

A series of no-wash acid activations was carried out using HSSC, an acidic sedimented naturally occurring mixture of attapulgite and calcium bentonite mined near Ochlocknee. A description of the chemical and physical properties of this clay appears in TABLE A.

Acid-activated samples of HSSC Hole #1 (composite) clay were prepared at the 1, 3 and 5% acid dosage levels by adding the clay to water and sulfuric acid so that the volatile free solids content at the resultant clay/acid/water slurry was 25 wt%. The slurries were heated for 1, 3 and 5.5 h at 25,43,60, 79 and 99°C (77,110,140,175 and 210°F). The acid treated samples were ground and dried as in Example 1. The 1 and 3 hour samples were obtained by extracting portions (40 cc) of the clay-acid slurry from the reaction flask using a wide-mouthed baster. The 5.5 hour sample was composed of the material remaining in the flask at the end of the run. Following the treatment period, the samples were filtered, and the resulting cakes dried at 30°C. The samples were then ground to 100%-75μm (-200 mesh).

The acid-activated HSSC, the unactivated HSSC, and Gr 105 and 160 standards [100%-75μm (-200 mesh)] were contacted with refined soybean oil at 0.5 wt% dosage. The bleaching results (TABLES 5-9) show that the activity of the acid-activated products was primarily affected by acid dosage level, rather than time or temperature. The products treated at 1% acid dosage were clearly less active than those treated at 3 and 5% dosages. However, treatment at the 3% level was sufficient to obtain maximum activity.

Effects on bleaching activity due to time and temperature (TABLES 5-7) were associated mainly with the removal of red color and, to a lesser extent, the peroxides. In fact, only for the 1% acid-activated case did the beneficial effects of increasing temperature cause consistent and significant reductions in the levels of these components. The effects of time in this case, and both time and temperature for the 3 and 5% acid dosage levels, appear less significant.

Under optimum conditions, the acid-activated HSSC clay prepared in this study showed an activity for red removal which comes between Gr 105 and Gr 160 (compare Table 6 with Table 8).

Regarding the removal of chlorophyll and peroxides, acid-activated HSSC clay was comparable to Gr 160. These results differed from those previously observed in that activated HSSC was comparable to or better than Gr 160 in the removal of red color and peroxides, but slightly less so in the removal of chlorophyll. It is believed that the difference arises from the different soybean oil feedstocks used in the tests. An evaluation of the relative bleaching efficiencies of the 3%/3 h/43°C (110°F)sample and the unactivated source clay vs. Gr 105 Std. are given in TABLE 9.

The results of these experiments show that acid dosage, not time and temperature, is the key variable in determining the bleaching activity of acid-activated HSSC clay. As long as the acid dosage level was 3% or higher, optimum activity resulted. Furthermore, at optimum activity the acid-activated product was competitive with Gr 160 and better than Gr 105 when bleaching refined soybean oil.

Based on these results, recommended conditions for no-wash acid activations of HSSC clay are as follows:

| Treater Feed Moisture Content | 20% VM |
|---|---|
| Acid Dosage | 3% (no less) |
| Time | 3 hr. |
| Temperature | 60°C(140°F) (Although ambient temperature [25°C (77°F)] activations gave products which were quite active, it is advisable to heat the clay-acid slurry when activating on a commercial scale in order to minimize thickening which becomes significant at lower temperatures.) |
| Solids Content -Moisture Content - | 25% VF max. 15-20% VM |
| Finished product specifications: | |
| Moisture Content | 15-20% VM |
| Particle Size | 980% -75μm (-200 mesh) |
| pH and Residual Acidity | Typical values will lie in the 2.5-3.0 and 5.0-10.0 ranges, respectively. |

## TABLE 5

### REFINED SOYBEAN OIL(a) BLEACHED(b)
### WITH 1% ACID-ACTIVATED HSSC(c)

| Average | Lv Red – | – | 7.7 |
|---|---|---|---|
| Values | Chlorophyll – | – | 93 ppb |
| | Peroxide – | – | 1.0 |
| | Value | | |

| TEMP(°F) | °C | ACTIVATION TIME (HR) | | | BLEACHED OIL PROPERTY |
|---|---|---|---|---|---|
| | | 1 | 3 | 5.5 | |
| (77) | 25 | 8 | 7.6 | 8 | Lv RED |
| | | 92 | 76 | 76 | CHLOR (PPB) |
| | | 1 | 1.1 | 1.1 | PV |
| (110) | 43 | 8.1 | 8.8 | 8.2 | |
| | | 101 | 101 | 107 | |
| | | 1 | 1.2 | 1.2 | |
| (140) | 60 | 8.2 | 8.2 | 7.9 | |
| | | 108⋆ | 96 | 82 | |
| | | 1.2 | 1.2 | 0.9 | |
| (175) | 79 | 7.8 | 6.9 | 6.7 | |
| | | 102 | 90 | 82 | |
| | | 1.1 | 0.9 | 0.5 | |
| (210) | 99 | 6.8 | 6.3 | 7.2 | |
| | | 89 | 71 | 99 | |
| | | 0.7 | 0.6 | 0.8 | |

(a) Uncontacted oil-15.5 Lv red; 620 ppb chlorophyll; 1.6 peroxide value.

(b) Oil contacted with 0.5 wt% clay at 93°C (200°F) for 15 min. under vacuum of 96.5 kPa (28.5 in.Hg).

(c) High susceptibility source clay from Georgia.

TABLE 6
REFINED SOYBEAN OIL(a) BLEACHED(b)
WITH 3% ACID-ACTIVATED HSSC(c)

| Average Values | | Lv Red – | – | 6.0 |
| | | Chlorophyll – | – | 42 ppb |
| | | Peroxide – | – | 0.5 |
| | | Value | | |

| TEMP (°F) | °C | ACTIVATION TIME (HR) | | | BLEACHED OIL PROPERTY |
| | | 1 | 3 | 5.5 | |
|---|---|---|---|---|---|
| (77) | 25 | 6.1 | 6.6 | 5.8 | Lv RED |
| | | 33 | 38 | 38 | CHLOR (PPB) |
| | | 0.3 | 0.5 | 0.5 | PV |
| (110) | 43 | 6.1 | 6 | 5.7 | |
| | | 46 | 37 | 34 | |
| | | 0.6 | 0.4 | 0.4 | |
| (140) | 60 | 6 | 5.5 | 6.9 | |
| | | 39 | 36 | 55 | |
| | | 0.5 | 0.4 | 0.6 | |
| (175) | 79 | 6.1 | 6.1 | 5.6 | |
| | | 38 | 41 | 51 | |
| | | 0.4 | 0.4 | 0.8 | |
| (210) | 99 | 5.9 | 6.1 | 5.7 | |
| | | 57 | 46 | 40 | |
| | | 0.5 | 0.5 | 0.5 | |

(a) Uncontacted oil-15.5 Lv red; 620 ppb chlorophyll; 1.6 peroxide value.

(b) Oil contacted with 0.5 wt% clay at 93°C (200°F) for 15 min. under vacuum of 96.5 kPa (28.5 in.Hg).

(c) High susceptibility source clay from Georgia.

## TABLE 7
## REFINED SOYBEAN OIL(a) BLEACHED(b)
## WITH 5% ACID-ACTIVATED HSSC(c)

|        |     | Lv Red     | – | – | 6.5     |
|--------|-----|------------|---|---|---------|
| Average |    | Chlorophyll | – | – | 45 ppb  |
| Values |     | Peroxide   | – | – | 0.5     |
|        |     | Value      |   |   |         |

| TEMP($^{\circ}$F) | $^{\circ}$C | ACTIVATION TIME (HR) | | | BLEACHED OIL PROPERTY |
|---|---|---|---|---|---|
|   |   | 1 | 3 | 5.5 |   |
| (77) | 25 | 7.1 / 47 / 0.5 | 6.8 / 45 / 0.5 | 6.9 / 42 / 0.5 | Lv RED / CHLOR (PPB) / PV |
| (110) | 43 | 6.8 / 38 / 0.4 | 6.5 / 41 / 0.4 | 6.1 / 40 / 0.5 | |
| (140) | 60 | 6.3 / 44 / 0.5 | 6.2 / 34 / 0.5 | 5.5 / 37 / 0.3 | |
| (175) | 79 | 6.9 / 53 / 0.5 | 6.7 / 55 / 0.6 | 6.2 / 46 / 0.6 | |
| (210) | 99 | 6.2 / 37 / 0.3 | 7.3 / 71 / 0.7 | 6.4 / 49 / 0.6 | |

(a) Uncontacted oil-15.5 Lv red; 620 ppb chlorophyll; 1.6 peroxide value.

(b) Oil contacted with 0.5 wt% clay at 93°C (200°F) for 15 min. under vacuum of 96.5 kPa (28.5 in.Hg).

(c) High susceptibility source clay from Georgia.

TABLE 8

| BLEACHED(a) SOYBEAN OIL PROPERTIES | | | |
|---|---|---|---|
| SAMPLE | Lov RED | CHLOROPHYLL (PPB) | PEROXIDE VALUE |
| STARTING OIL | 15.5 | 620 | 1.6 |
| UNACT. HSSC | 9.0 | 128 | 1.3 |
| 3-5% H2SO4 ACID-ACT. HSSC | 6.3 | 44 | 0.5 |
| GR 105 STD | 8.4 | 89 | 0.9 |
| GR 160 STD | 4.9 | 36 | 0.6 |

(a) See footnote b., Table 5

TABLE 9

| BLEACHING EFFICIENCY OF ACID-ACTIVATED AND UNACTIVATED HSSC VS. GR 105 STD IN REFINED SOYBEAN OIL | | |
|---|---|---|
| SAMPLE | BLEACHING EFFICIENCY | |
| | @ 3 Lv RED (a) | @ 30 PPB CHLOROPHYLL (b) |
| GR 105 STD | 100 | 100 |
| UNACT. HSSC | 98 | 85 |
| ACT. HSSC [3%/3hr/45°C (110°F)] | 116 | 137 |

(a) Bleaching efficiency @ 3 Lv Red = (wt of STD to 3 Lv Red X 100)/(wt of unknown to 3 Lv Red)
(b) Bleaching efficiency @ 30 PPB chlorophyll = (wt of STD to 30 PPB Chlor X 100)/(wt of unknown to 30 PPB Chlor)

Example 5

A series of (no wash) acid-activated products, using HSSC Hole #1 as source material, were prepared at 4% acid dosage under variable time and temperature conditions. The run conditions, bleaching efficiencies (in refined soybean oil), filtration times and selected physiochemical properties for the products are summarized in TABLE 10. The results shows that the more finely ground products (Runs 1-4, and 5 [fine]) exhibited bleaching activities comparable to or slightly greater than Gr 105, while maintaining much improved filtration rates (lower times). In particular, samples from runs 3,4 and 5 (fine) show rates which are almost as fast as Gr 105 SF (which is a fast filtering version of Gr 105).

## TABLE 10 EFFECT OF PROCESSING VARIABLES ON EFFICIENCY OF ACID-ACTIVATED HIGH SUSCEPTIBILITY SOURCE CLAY

| SAMPLE | TREATER TIME(hr) | TEMP($^O$F) $^O$C | BLEACHING EFFIC.(a) CHLOROPHYLL (PPB) | LOVIBOND RED | FILTER TIME(b) (sec) | MESH(c) T-200 (WT%) | Vm (WT%) | pH | RESIDUAL ACIDITY (d) |
|---|---|---|---|---|---|---|---|---|---|
| Gr 105 STD | – | – | 100 | 100 | 145 | – | – | – | – |
| GR 105 SF | – | – | 100 | 100 | 39 | – | – | – | – |
| HSSC RUN # | | | | | | | | | |
| 1 | 3 | (130) 54 | 111 | 110 | 88 | 83 | 18.1 | 3.2 | 8.9 |
| 2 | 1 | (150) 66 | 116 | 122 | 108 | 93 | 20.1 | 3.4 | 10.7 |
| 3 | 4.5 | (150) 66 | 122 | 110 | 58 | 98 | 23.6 | 3.3 | 10.8 |
| 4 | 3.5 | (135) 57 | 115 | 100 | 46 | 97 | 26.6 | 2.9 | 7.2 |
| 5 | 4 | (130) 54 | | | | | | | |
| (FINE) | | | 104 | 88 | 55 | 88 | 20.9 | 2.4 | 8.9 |
| (COARSE) | | | 66 | 70 | 30 | 56 | 30.7 | 2.2 | 8.1 |
| 6 | 4.5 | (160) 71 | | | | | | | |
| (FINE) | | | 86 | 90 | 36 | 74 | 26.1 | 2.7 | 8.1 |
| (MEDIUM) | | | 88 | 80 | 53 | 64 | 30.1 | 2.2 | 7.4 |
| (COARSE) | | | 75 | 82 | 43 | 56 | 23.5 | 2.2 | 8.3 |

(a) See footnotes (a), (b), TABLE 9
(b) 1 wt% clay in 150 gm soya oil; contacted for 5 min.at $120^O$C($248^O$F). Mixture suction filtered hot through 11 cm Whatman No. 2 filter paper.
(c) Particle size; wt% of sample passing Tyler screen of 75 µm (200 mesh),
(d) Measured in mg KOH/gm clay.

EP 0 398 636 B1

Example 6

Mineral acids hydrochloric, phosphoric and sulfuric, a strong organic acid (formic) and a complexing acid (citric) were used with HSSC in practice of the invention. Conditions used in the acid treatments are described in TABLES 11 and 12.

Using slurry activation conditions, some selective differences in removing pigments and other trace constituents from soya oil were noted as a function of the type of acid used; however, overall adsorptive capacity relative to the unactivated clay was always improved except for free fatty acids rise where the raw clay acts as a net adsorber of free free fatty acids (see TABLE 12).

Data in TABLE 12 show that different acids can be simply spray coated onto the HSSC to yield improved products, but it is clear that Lovibond red color and peroxides in the oil were most reduced when sulfuric acid was utilized. For chlorophyll reduction, phosphoric or citric treated products showed a slight advantage. In all cases, the sulfuric acid treated HSSC was equivalent or superior to the use of Oil Dri PureFlow B80 when the oil was treated with 4% citric acid before bleaching. Ash is also clear from this table, neither pure attapulgite nor pure bentonite clays respond to these low acid-dosage activations as well as HSSC.

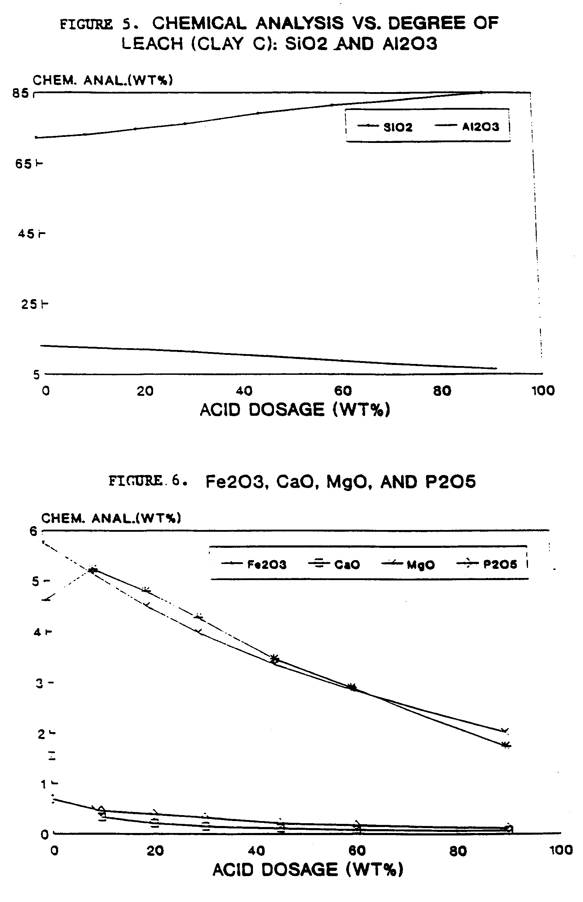

As can be seen from tabulated chemical analyses in Example 1 and accompanying Figures 5 and 6, treatment with acid tends to reduce $Fe_2O_3$, $CaO$, $MgO$, and $P_2O_5$ content at all dosage levels (accompanied by an apparent increased in $SiO_2$ content). Only at the higher acid dosages is $Al_2O_3$ significantly removed from the clay. This suggests that exchange of $Ca^{++}$ and $Mg^{++}$ for protons is the primary role of the acid at lower dosages, but that actual leaching of the clay structure (i.e. - removal of structural ions) does begin to occur at the higher acid dosages.

Example 7

A sample of high purity bentonite (Filtrol GR 2, source clay B) was dried at 110°C to 10-11 wt% LOD (loss on drying), 300°C) and ground [90% <75μm (<200 mesh)] and aliquots were then spray-coated with dilute solutions (10%-25%) of various acids to yield samples having been subjected to acid dosages between 1 - 8 wt%. The spray-coating was accomplished by spraying a mist of the dilute acid solution into a rotating vessel containing the dried, powdered samples of the above mentioned clays. After allowing the samples to equilibrate at room temperature for three days in closed containers, they were redried (at 110°C) to the range 10 -11 wt% LOI, and any agglomerates broken up so that the final sample was at least 90% <75μm (<200 mesh).

These samples were then evaluated as in Example 1 (i.e. - 0.5 wt% clay, as is, based on the amount of oil).

As shown in TABLE 13 source clay B (high purity bentonite) showed essentially no improvement at these low acid dosages, regardless of the level of acid (up to 8 wt%) and type of acid.

The processes just described have numerous economic and procedural advantages over the process normally employed: 1) lower acid costs per unit mass of clay treated; 2) lower production costs (no washing, filtering, or waste treatments steps); and 3) environmental soundness (i.e. - no harmful environmental waste products, are produced). Considering the fact that attapulgite clays are not normally used as the source of acid activated clay and almost a century of effort has been directed to manufacturing and improving acid-activated bleaching earths, the results were unexpected. It is believed that the vast number of prior art investigators overlooked the effect of carbonate (limestone) impurities on the activation process, thereby failing to note that certain palygorskite clays (those naturally acidic, hence, low in free carbonate) would be amenable to a simple, cost effective treatment.

Mesh sizes specified herein are according to the Tyler Series.

TABLE 11

| | | | EFFECT OF DIFFERENT ACIDS | | | | | |
|---|---|---|---|---|---|---|---|---|
| ACID DOSAGE (WT%) | ACID CONC. (MMOL/100 GM CLAY) | ACID TYPE | .5 WT% DOSAGE | | | .7 WT% DOSAGE | | |
| | | | Lv RED | Lv Chlorophyl ppb | PV | Lv RED | % FFA | PV |
| Raw Clay | | NONE | 8.1 | 93 | | 5.9 | 0.05 | |
| 5 | 0.538 | H2SO4 | 3.8 | 28 | 0.8 | 3 | 0.054 | 0.6 |
| 5 | 0.538 | H3PO4 | | | | 4.5 | 0.054 | 1.02 |
| 9.5 | 1.08 | H3PO4 | | | | 5.4 | 0.056 | 0.84 |
| 3.8 | 1.08 | HCL | 5 | 6 | 1.04 | 4.9 | 0.059 | 2.35 |
| 5 | 1.44 | HCL | 4.9 | 7 | 0.95 | 4.1 | 0.057 | 1.53 |
| 4.7 | 1.08 | HCO2H | 5.1 | 27 | 1.95 | 2.7 | 0.05 | 0.9 |
| 5 | 1.15 | HCO2H | | | | 2.8 | 0.05 | 0.92 |
| 5 | 0.274 | CITRIC | | | | 5 | 0.053 | 1 |
| 17 | 1.08 | CITRIC | 7.3 | 28 | 1.3 | 4.1 | 0.055 | 0.68 |
| Starting Oil | | | 16.6 | 625 | | | 0.052 | |

Activation conditions: 80 Vf gms HSSC added to water (25 wt% solids), and then sufficient acid to achieve indicated concentrations. Slurries heated at 160°C/1 hr. Reaction mixtures then quenched in 300 cc D.I. water, filtered, dried, and ground.

TABLE 12

| ACID-SPRAYED HSSC(1) VS. CLAY TYPE and ACID TYPE | | | | | | |
|---|---|---|---|---|---|---|
| CLAY TYPE | ACID TYPE | WT% ACID | | | | OD + CIT(4) |
| | | 0% | 1% | 3% | 5% | |
| Lovibond Red | | | | | | |
| HSSC(1) | H2SO4 | 8.1 | 3.2 | 2.7 | 2.9 | |
| ATTA(2) | | 10.2 | 11.4 | 8.6 | 9.1 | |
| MONT(3) | | 12.4 | 14.5 | 14 | 14.6 | |
| HSSC(1) | H3PO4 | 8.1 | 6.9 | 7.5 | 8.5 | |
| ATTA(2) | | 10.2 | 11.3 | 10.8 | 11.3 | |
| MONT(3) | | 12.4 | 14 | 14.1 | 14 | |
| HSSC(1) | CITRIC | 8.1 | 7.8 | 6.9 | 7.1 | |
| ATTA(2) | | 10.2 | 9.7 | 10 | 8.8 | |
| MONT(3) | | 12.4 | 13.9 | 14.5 | 14.4 | 2.8 |
| Chlorophyll (ppb) | | | | | | |
| HSSC(1) | H2SO4 | 166 | 60 | 53 | 67 | |
| ATTA(2) | | 303 | 302 | 208 | 188 | |
| MONT(3) | | 660 | 686 | 695 | 689 | |
| HSSC(1) | H3PO4 | 166 | 97 | 43 | 55 | |
| ATTA(2) | | 303 | 281 | 223 | 167 | |
| MONT(3) | | 660 | 696 | 694 | 678 | |
| HSSC(1) | CITRIC | 166 | 100 | 42 | 36 | |
| ATTA(2) | | 303 | 220 | 140 | 94 | |
| MONT(3) | | 660 | 650 | 614 | 603 | 55 |
| Peroxide Value | | | | | | |
| HSSC(1) | H2SO4 | 7.1 | 4 | 1.9 | 1.5 | |
| ATTA(2) | | 8.2 | 8 | 7.3 | 7.5 | |
| MONT(3) | | 8.6 | 9.2 | 9.2 | 9 | |
| HSSC(1) | H3PO4 | 7.1 | 6.6 | 5.4 | 4.9 | |
| ATTA(2) | | 8.2 | 8 | 7.7 | 7.8 | |
| MONT(3) | | 8.6 | 9 | 9.3 | 9.6 | |
| HSSC(1) | CITRIC | 7.1 | 6.8 | 6 | 5 | |
| ATTA(2) | | 8.2 | 7.5 | 7.5 | 7 | |
| MONT(3) | | 8.6 | 9 | 9.3 | 9 | 3.6 |

(1) High Susceptibility Source Clay: Activation Conditions: -75$\mu$m 90%(-200 mesh) clay tumbled in 3$\ell$. flask and 10-25 wt% acid solution sprayed on at room temperature. Treated clay equilibrated 3 days at room temperature, then dried back to original Vol.
(2) Attapulgite - Engelhard 200 UP/LVM.
(3) Montmorillonite - Filtrol Gr 2.
(4) Oil Dri PF B80 using 4% citric acid treated oil (based on weight of dry clay).

TABLE 13

| EFFECT OF ACID DOSAGE AND ACID TYPE ON BLEACHING ACTIVITY(a) OF SPRAY-COATED ATTAPULGITE VS. BENTONITE SOURCE CLAY | | | | | | |
|---|---|---|---|---|---|---|
| SOURCE CLAY | ACID TYPE | % ACID DOSE(b) | LOVIBOND RED | CHLOROPHYLL (PPB) | PEROXIDE VALUE | %FFA (WT%) |
|  | none | 0 | 13.9 | 660 | 8.6 | 0.036 |
| B | H2SO4 | 1 | 14.5 | 686 | 9.2 | 0.037 |
|  |  | 3 | 14.6 | 695 | 9.2 | 0.035 |
|  |  | 5 | 14.0 | 689 | 9.0 | 0.035 |
|  |  | 8 | 13.4 | 642 | 9.2 | 0.037 |
| B | H3PO4 | 1 | 14.0 | 696 | 9.0 | 0.038 |
|  |  | 3 | 14.1 | 694 | 9.3 | 0.035 |
|  |  | 5 | 14.0 | 678 | 9.6 | 0.038 |
|  |  | 8 | 13.8 | 665 | 9.1 | 0.037 |
| B | citric | 1 | 14.8 | 685 | 10.4 | 0.035 |
|  |  | 3 | 14.7 | 695 | 10.9 | 0.039 |
|  |  | 5 | 14.3 | 681 | 10.4 | 0.038 |
| Gr 105 STD |  |  | 8.0 | 88 | 6.2 | 0.047 |
| Gr 160 STD |  |  | 3.7 | 39 | 3.3 | 0.049 |
| uncontacted oil |  |  | 15.4 | 715 | 9.2 | 0.039 |

(a) All bleaching contacts done with 0.5% clay in soya oil.
(b) % Acid Dose = (wt. of pure acid X 100)/(wt. of dry clay).

## Claims

1. A method for producing bleaching earth from clay which comprises providing an uncalcined naturally-occurring acidic mixture of palygorskite and bentonite clays, said clay containing from 10 to 90 wt.% of attapulgite and having a pore volume of at least 0.15 cc/g, mixing said clay with an acid solution in amount corresponding to an acid dosage of 1 to 10 wt.%, reacting said clay with said acid, and recovering said reacted clay for use as a bleaching earth.

2. A method according to claim 1 having one or more of the following features: (1) said clay has a slurry pH in the range of 5 to 7; (2) said clay has a pore volume of 0.15-0.5 cc/g, or 0.25-0.35 cc/g; (3) said clay contains no more than 5 wt.% $CO_2$ on a moisture free basis.

3. A method according to claim 1 or 2 which uses a said clay mixture containing from 20-60 wt.% of attapulgite.

4. A method according to claim 1, 2 or 3 wherein the acid dosage is from 3 to 5 wt.%.

5. A method according to any preceding claim wherein said acid is selected from sulfuric, phosphoric, hydrochloric, formic and citric acids.

6. A method according to any preceding claim wherein the reacted clay is recovered without washing.

7. A method according to any preceding claim wherein said clay is dried and ground before mixing with said acid.

8. A method according to any preceding claim wherein the acid/clay mixture is filtered after heating and the filtrate is recycled.

9. A method according to any preceding claim wherein (1) said mixture of clay and acid is heated while it is spray dried, or (2) said mixture of clay and acid is formed by spraying acid solution onto dried clay.

10. A method of bleaching oil which comprises contacting the oil with bleaching earth obtained by a method according to any preceding claim.

**Patentansprüche**

1. Verfahren zur Herstellung von Bleicherde aus Ton, umfassend das Zur-Verfügung-Stellen einer uncalcinierten natürlich vorkommenden sauren Mischung aus Palygorskit- und Bentonittonen, wobei dieser Ton 10 bis 90 Gew.-% Attapulgit enthält und ein Porenvolumen von wenigstens 0,15 cm$^3$/g besitzt, das Mischen des genannten Tons mit einer Säurelösung in einer Menge, die einer Säuredosis von 1 bis 10 Gew.-% entspricht, das Umsetzen des genannten Tons mit der genannten Säure und die Gewinnung des genannten umgesetzten Tons zur Verwendung als eine Bleicherde.

2. Verfahren gemäß Anspruch 1 mit einem oder mehreren der folgenden Kennzeichen: (1) der genannte Ton hat einen Aufschlämmungs-pH-Wert im Bereich von 5 bis 7; (2) der genannte Ton hat ein Porenvolumen von 0,15-0,5 cm$^3$/g oder 0,25-0,35 cm$^3$/g; (3) der genannte Ton enthält nicht mehr als 5 Gew.-% $CO_2$ auf einer feuchtigkeitsfreien Basis.

3. Verfahren gemäß Anspruch 1 oder 2, das eine genannte Tonmischung verwendet, die 20-60 Gew.-% Attapulgit enthält.

4. Verfahren gemäß Anspruch 1, 2 oder 3, worin die Säuredosis 3 bis 5 Gew.-% beträgt.

5. Verfahren gemäß irgendeinem vorhergehenden Anspruch, worin die genannte Säure aus Schwefel-, Phosphor-, Salz-, Ameisen- und Zitronensäuren ausgewählt ist.

6. Verfahren gemäß irgendeinem vorhergehenden Anspruch, worin der umgesetzte Ton ohne Waschen gewonnen wird.

7. Verfahren gemäß irgendeinem vorhergehenden Anspruch, worin der genannte Ton getrocknet und zermahlen wird, bevor er mit der genannten Säure vermischt wird.

8. Verfahren gemäß irgendeinem vorhergehenden Anspruch, worin die Säure-Ton-Mischung nach dem Erwärmen filtriert und das Filtrat wiederverwendet wird.

9. Verfahren gemäß irgendeinem vorhergehenden Anspruch, worin (1) die genannte Mischung aus Ton und Säure während sie sprühgetrocknet wird erwärmt wird, oder (2) die genannte Mischung aus Ton und Säure durch Sprühen von Säurelösung auf getrockneten Ton gebildet wird.

10. Verfahren zum Bleichen von Öl, das das In-Kontakt-Bringen des Öls mit Bleicherde, die durch ein Verfahren gemäß irgendeinem vorhergehenden Anspruch erhalten wird, umfaßt.

**Revendications**

1. Procédé de production d'une terre décolorante à partir d'argile, caractérisé en qu'il comprend le fait de prévoir un mélange acide naturel non calciné d'argiles palygorskite et bentonite, ladite argile contenant de 10 à 90% en poids d'attapulgite et ayant un volume poreux d'au moins 0,15 cm$^3$/g, le mélange de ladite argile avec une solution d'acide dans une quantité correspondant à une dose d'acide de 1 à 10% en poids, la mise en réaction de ladite argile avec ledit acide, et la récupération de ladite argile ayant réagi en vue d'une utilisation en tant que terre décolorante.

2. Procédé selon la revendication 1, caractérisé en ce qu'il présente une ou plusieurs des caractéristiques suivantes: (1) ladite argile possède un pH de boue entre 5 et 7; (2) ladite argile possède un volume de pore de 0,15-0,5 cm$^3$/g

ou de 0,25-0,35 cm$^3$/g; (3) ladite argile ne contient pas plus de 5% en poids de $CO_2$ sur une base d'absence d'humidité.

3. Procédé selon la revendication 1 ou 2, caractérisé en ce qu'il utilise ledit mélange d'argile contenant 20-60% en poids d'attapulgite.

4. Procédé selon la revendication 1, 2 ou 3, caractérisé en ce que la dose d'acide est de 3 à 5% en poids.

5. Procédé selon l'une quelconque des revendications précédentes, caractérisé en ce que ledit acide est choisi parmi les acides sulfurique, phosphorique, chlorhydrique, formique et citrique.

6. Procédé selon l'une quelconque des revendications précédentes, caractérisé en ce que l'argile ayant réagi est récupérée sans lavage.

7. Procédé selon l'une quelconque des revendications précédentes, caractérisé en ce que ladite argile est séchée et broyée avant d'être mélangée avec ledit acide.

8. Procédé selon l'une quelconque des revendications précédentes, caractérisé en ce que le mélange acide/argile est filtré après chauffage et le filtrat est recyclé.

9. Procédé selon l'une quelconque des revendications précédentes, caractérisé en ce que (1) ledit mélange d'argile et d'acide est chauffé tout en étant séché par pulvérisation ou (2) ledit mélange d'argile et d'acide est formé en pulvérisant une solution d'acide sur l'argile séchée.

10. Procédé de décoloration d'huile, caractérisé en ce qu'il comprend la mise en contact de l'huile avec la terre décolorante obtenue par un procédé selon l'une quelconque des revendications précédentes.

# FIG. 1: CLAY ACID-ACTIVATION
## CONVENTIONAL PROCESS

RAW CLAY → CRUSHER

CRUSHER → PREDRIER

SULFURIC ACID

FRESH WATER

MIXER

TREATERS

SOUR WATER RECYCLE

FILTER

EXCESS TO WASTE

BAGGER OR BULK STORAGE ← DRIER AND PULVERIZER

# FIG. 2: CLAY ACID-ACTIVATION
## SPRAY COATING METHOD

RAW CLAY → CRUSHER

DRIER AND PULVERIZER

WATER/SULFURIC ACID SPRAY

MIXER

BAGGER OR BULK STORAGE

# FIG. 3: CLAY ACID ACTIVATION
## SPRAY DRIER PROCESS

# FIG. 4: CLAY ACID-ACTIVATION
## MODIFIED CONVENTIONAL PROCESS

## FIGURE 5. CHEMICAL ANALYSIS VS. DEGREE OF LEACH (CLAY C): SiO2 AND Al2O3

CHEM. ANAL.(WT%)

ACID DOSAGE (WT%)

## FIGURE 6. Fe2O3, CaO, MgO, AND P2O5

CHEM. ANAL.(WT%)

ACID DOSAGE (WT%)